# FASCICULE DE BREVET EUROPEEN

(11) **EP 2 809 582 B1**
(45) Date de publication et mention de la délivrance du brevet: **24.10.2018**
(21) Numéro de dépôt: 13706610.6
(22) Date de dépôt: 31.01.2013
(51) Int. Cl.: B64G 1/40, B64G 1/42, F02K 9/22, B64G 1/24

(54) **ENGIN SPATIAL A PROPULSION ELECTRIQUE ET CHIMIQUE A PROPERGOL SOLIDE.**
RAUMFAHRZEUG MIT ELEKTRISCHEM UND CHEMISCHEM FESTSTOFFANTRIEB
SPACECRAFT WITH ELECTRICAL AND CHEMICAL SOLID PROPULSION

(30) Priorité: 01.02.2012 FR 1250945
(43) Date de publication de la demande: 10.12.2014
(73) Titulaire: Safran Ceramics, 33185 Le Haillan (FR)
(72) Inventeur: DUCHEMIN, Olivier, 78114 Magny-les-Hameaux (FR); YVART, Pierre, Marcel, 91610 Ballancourt sur Essonne (FR)
(74) Mandataire: Intès, Didier Gérard André
(86) Numéro de dépôt international: PCT/FR2013/050208
(87) Numéro de publication internationale: WO 2013/114049

(56) Documents cités:
- EP-A2- 1 227 038
- WO-A1-2009/140635
- US-A- 5 312 073
- US-A1- 2005 005 593
- US-B1- 6 464 174
- KRAUTHAMER S ET AL: "POWER PROCESSING UNITS FOR HIGH POWERED SOLAR ELECTRIC PROPULSION USING MPD THRUSTERS", AEROSPACE POWER, CONVERSION TECHNOLOGY, ELECTROCHEMICAL CONVERSION. ATLANTA, AUG. 8 - 13, 1993; [PROCEEDINGS OF THE INTERSOCIETY ENERGY CONVERSION ENGINEERING CONFERENCE (IECEC)], NEW YORK, IEEE, US, vol. 1, 8 août 1993 (1993-08-08), pages 1.285-1.290, XP000428314,

## Description

### DOMAINE DE L'INVENTION

Le présent exposé concerne un engin spatial.

Un tel engin spatial peut être un satellite, une sonde, ou encore un étage supérieur d'une fusée pour ne citer que ces exemples.

### ETAT DE LA TECHNIQUE ANTERIEURE

Les satellites et autres engins spatiaux sont habituellement équipés de propulseurs permettant leur manoeuvre dans l'espace. Ces derniers sont fréquemment des propulseurs chimiques à ergols liquides : ces propulseurs chimiques sont capables d'offrir des accélérations importantes de l'ordre de plusieurs g ou dizaines de g mais souffrent d'une impulsion spécifique assez faible. L'impulsion spécifique (Isp) est proportionnelle au rapport entre la poussée du propulseur et le débit massique des particules éjectées : il traduit donc d'une certaine manière l'efficacité du propulseur.

Depuis quelques années, des propulseurs électriques ont été développés : ces propulseurs produisent une poussée par accélération et éjection de particules chargées, des ions notamment. Ces propulseurs électriques présentent une impulsion spécifique bien meilleure, environ 5 à 10 fois plus grande que celle des propulseurs chimiques. Ils fournissent en revanche des accélérations très faibles, de l'ordre de 10⁻⁵ g, qui entraînent néanmoins des vitesses significatives lorsqu'elles sont maintenues sur une longue durée.

Tirant parti de ces spécificités opposées, des engins spatiaux connus sont munis de propulseurs chimiques à ergols liquides d'une part, adaptés aux manoeuvres rapides nécessitant de fortes accélérations, et de propulseurs électriques d'autre part, adaptés aux manoeuvres peu contraintes en durée.

Toutefois, la propulsion liquide est coûteuse, complexe et peu robuste. En outre, les nouvelles normes environnementales pourraient bientôt restreindre l'usage de certains ergols liquides fréquemment utilisés aujourd'hui, l'hydrazine notamment.

Il existe donc un réel besoin pour un engin spatial muni d'une propulsion qui soit dépourvue, au moins en partie, des inconvénients inhérents aux propulsions connues précitées.

Le document US 6 464 174 B1 divulgue un engin spatial comprenant un propulseur chimique à propergol solide et un propulseur électrique.

### PRESENTATION DE L'INVENTION

Le présent exposé concerne un engin spatial selon la revendication 1 annexée comprenant au moins un propulseur chimique à propergol solide, et au moins un propulseur électrique.

Les propulseurs chimiques à propergol solide, également appelés ci-après propulseurs solides, proposent une gamme de poussée comparable à celle des propulseurs chimiques à ergols liquides : ils se substituent donc facilement aux propulseurs liquides dans un usage de type forte poussée, notamment en tant que propulseur principal d'un engin spatial. Ils s'utilisent ainsi avantageusement lorsque les manoeuvres doivent être rapidement exécutées : il peut s'agir par exemple d'une manoeuvre de capture planétaire, d'une manoeuvre de sortie d'un environnement néfaste pour l'engin comme les ceintures de radiations de Van Allen par exemple, ou d'une manoeuvre d'urgence.

De plus, les propulseurs solides sont moins complexes et donc moins coûteux que leurs homologues liquides. Le stockage, notamment, d'un propergol solide est simplifié : en particulier, celui-ci ne nécessite pas de réservoirs pressurisés, de conduites d'amenée, ou de préchauffeur. Il n'impose pas non plus un stockage séparé de deux ergols, ni un dispositif permettant leur mélange avant la combustion. Outre une simplicité accrue, ces propulseurs solides réduisent la masse des équipements emportés augmentant d'autant la masse utile disponible de l'engin, ce qui est un autre avantage économique important. En outre, la toxicité des propergols solides est généralement moindre que celle des ergols liquides et sont donc moins sujets à des restrictions environnementales.

Les propulseurs électriques fournissent quant à eux une poussée beaucoup plus faible mais offrent une Isp plus importante : ils se substituent donc avantageusement aux propulseurs chimiques pour des manoeuvres peu contraintes en durée dans lesquelles l'engin ne verra son vecteur vitesse significativement altéré qu'au bout d'une durée plus importante. Il peut s'agir par exemple d'un transfert d'orbite, d'une mission cargo ou d'une mise à poste d'un satellite.

L'engin spatial combine ainsi les avantages des propulseurs solides et des propulseurs électriques tout en réduisant l'impact de leurs défauts respectifs en tirant profit des spécificités des différentes manoeuvres à exécuter.

Dans certains modes de réalisation, le propulseur chimique à propergol solide est du type contrôlable électriquement pour allumer/éteindre le propulseur et moduler sa poussée. Ceci permet une grande modularité du propulseur solide qui peut être allumé, éteint, puis rallumé plusieurs fois dans une même mission ; sa poussée est modulable dans une certaine gamme, ce qui permet une grande variété de trajectoires différentes. L'allumage et la puissance du propulseur solide sont réglés par les caractéristiques d'un courant électrique de commande transmis au propulseur : il peut s'agir de sa tension, de son intensité et/ou de sa polarité par exemple. Un exemple de propulseur chimique à propergol solide à contrôle électrique est décrit dans la demande internationale de brevet WO 2009/140635.

Dans certains modes de réalisation, le propulseur électrique peut être du type à plasma stationnaire, c'est-à-dire à effet Hall. Il peut également s'agir d'un propulseur ionique à grille de type Kaufmann, d'un propulseur à plasma étagé de type coaxial, ou de tout autre propulseur dans lequel des particules chargées sont accélérées puis éjectées.

Selon l'invention, l'engin spatial comprend en outre un système mutualisé d'alimentation et de commande configuré pour alimenter en électricité et commander le propulseur chimique à propergol solide d'une part et le propulseur électrique d'autre part. Cette mutualisation permet une simplification des systèmes d'alimentation et de commande du système propulsif global. En particulier, il est possible d'adapter un système d'alimentation et de commande existant pour permettre également l'alimentation et la commande d'un propulseur solide : la transition de la technologie liquide vers la technologie solide est donc facilitée.

Selon l'invention, le système mutualisé d'alimentation et de commande comprend un dispositif de distribution de puissance configuré pour fournir une alimentation électrique régulée à partir d'au moins une source d'énergie électrique, un dispositif d'alimentation et de contrôle configuré pour fournir une pluralité d'alimentations électriques de types différents à partir de l'alimentation électrique régulée, et un dispositif de commutation configuré pour connecter sélectivement certaines desdites alimentations électriques à certains des propulseurs. Le propulseur solide s'intègre alors dans une architecture connue ce qui limite les adaptations nécessaires à l'utilisation d'un propulseur solide et facilite la transition vers cette technologie.

Dans certains modes de réalisation, la source d'énergie électrique comprend des panneaux solaires et/ou des batteries. Elle peut également comprendre une source d'énergie nucléaire associée à un système de conversion thermoélectrique ou tout d'autre dispositif capable de fournir de l'électricité.

Dans certains modes de réalisation, la télémétrie, la télécommande et la logique de pilotage du propulseur chimique à propergol solide et du propulseur électrique sont mutualisées dans le dispositif d'alimentation et de contrôle. Ceci complète la mutualisation des équipements nécessaires au fonctionnement des deux types de propulseurs et facilite donc encore l'intégration de la technologie solide dans l'architecture de l'engin spatial. Cette mutualisation et cette intégration offrent au système de propulsion solide une simplicité et une grande modularité : de cette manière, il peut constituer un module optionnel sur une plateforme standard.

Dans certains modes de réalisation, le dispositif d'alimentation et de contrôle fournit au moins une alimentation principale adaptée au fonctionnement du propulseur électrique et au moins une alimentation auxiliaire adaptée au fonctionnement du propulseur chimique à propergol solide. L'alimentation principale est avantageusement de forte puissance car la quasi-totalité de l'énergie utilisée par le propulseur électrique pour fournir la poussée est d'origine électrique. A l'inverse, l'alimentation auxiliaire peut être de plus faible puissance car celle-ci n'est utilisée que pour entretenir et moduler la combustion du propergol solide : la quasi-totalité de l'énergie utilisée par le propulseur solide pour fournir la poussée est en effet d'origine chimique.

Dans certains modes de réalisation, l'alimentation principale fournit une tension continue comprise entre environ 200 V et 1500 V avec une puissance comprise entre environ 1kW et 10 kW, l'alimentation auxiliaire fournit une tension continue comprise entre environ 20 V et 350 V avec une puissance comprise entre environ 50 W et 200 W. L'alimentation auxiliaire peut-être celle de l'électrode de démarrage du propulseur électrique par exemple.

Dans certains modes de réalisation utilisant des panneaux solaires, ces derniers sont au moins partiellement repliés lorsque le propulseur solide est en fonctionnement. Ceci permet d'éviter des sollicitations mécaniques trop importantes au niveau des panneaux solaires lors des manoeuvres nécessitant une forte accélération.

Dans certains modes de réalisation, le dispositif d'alimentation et de contrôle est configuré pour permettre le fonctionnement simultané d'un propulseur chimique à propergol solide et d'un propulseur électrique.

Dans certains modes de réalisation, l'engin spatial comprend au moins un propulseur chimique à propergol solide principal et une pluralité de petits propulseurs chimiques à propergol solide de plus faible puissance. La puissance de ces petits propulseurs solides peut être de l'ordre de 2% de la puissance du propulseur solide principal. Ils peuvent être répartis en différents points de l'engin spatial afin d'assurer un contrôle d'attitude trois axes de l'engin spatial.

Dans certains modes de réalisation, l'engin spatial comprend au moins un propulseur électrique principal et une pluralité de petits propulseurs électriques de plus faible puissance. La puissance de ces petits propulseurs électriques peut être de l'ordre de 2% de la puissance du propulseur électrique principal. Ils peuvent être répartis en différents points de l'engin spatial afin d'assurer un contrôle d'attitude trois axes de l'engin spatial.

Dans certains modes de réalisation, l'engin spatial comprend un propulseur chimique à propergol solide principal disposé sensiblement sur et orienté selon un axe d'inertie de l'engin, une pluralité de propulseurs électriques principaux disposés autour du propulseur chimique à propergol solide principal, et au moins trois petits propulseurs chimiques à propergol solide ou trois petits propulseurs électriques orientés selon des directions non coplanaires.

Dans certains modes de réalisation, l'engin spatial comprend plusieurs propulseurs électriques principaux disposés de part et d'autre du propulseur solide principal. De préférence, ces propulseurs électriques principaux sont au nombre de deux.

Dans certains modes de réalisation, l'engin spatial est sensiblement polyédrique et les petits propulseurs solides et/ou les petits propulseurs électriques sont disposés à certains des coins, ou à chaque coin, de l'engin spatial. En particulier, un petit propulseur solide peut être associé à chaque petit propulseur électrique.

Dans certains modes de réalisation, la propulsion de l'engin spatial est exclusivement réalisée à l'aide de propulseurs chimiques à propergol solide et de propulseurs électriques. En particulier, dans certains modes de réalisation, l'engin spatial ne comporte aucun propulseur chimique à ergols liquides.

Dans certains modes de réalisation, l'engin spatial comporte en outre au moins un dispositif d'orientation de poussée permettant de contrôler l'orientation du vecteur poussée d'un propulseur solide. De préférence, ce dispositif d'orientation comprend des vérins électriques.

Dans de tels modes de réalisation, la commande et l'alimentation du dispositif d'orientation de poussée sont assurés par le système mutualisé d'alimentation et de commande électrique. Plus particulièrement, le dispositif d'alimentation et de contrôle fournit au moins une alimentation adaptée au fonctionnement du dispositif d'orientation de poussée.

Les caractéristiques et avantages précités, ainsi que d'autres, apparaîtront à la lecture de la description détaillée qui suit d'exemples de réalisation de l'engin spatial proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure à l'autre, des éléments (ou parties d'élément) identiques sont repérés par les mêmes signes de référence.
La FIG 1 est une vue schématique de dessus d'un exemple de réalisation de l'engin spatial dans un mode forte poussée.
La FIG 2 est une vue schématique de dessus de l'engin spatial de la FIG 1 dans un mode forte Isp.
La FIG 3 est une vue en coupe d'un exemple de réalisation d'un propulseur chimique à propergol solide.
La FIG 4 est un schéma représentant de manière très simplifiée un exemple de réalisation du système mutualisé d'alimentation et de commande de l'engin spatial.

### DESCRIPTION DETAILLEE D'EXEMPLE(S) DE REALISATION

Afin de rendre plus concrète l'invention, un exemple d'engin spatial est décrit en détail ci-après, en référence aux dessins annexés. Il est rappelé que l'invention ne se limite pas à cet exemple.

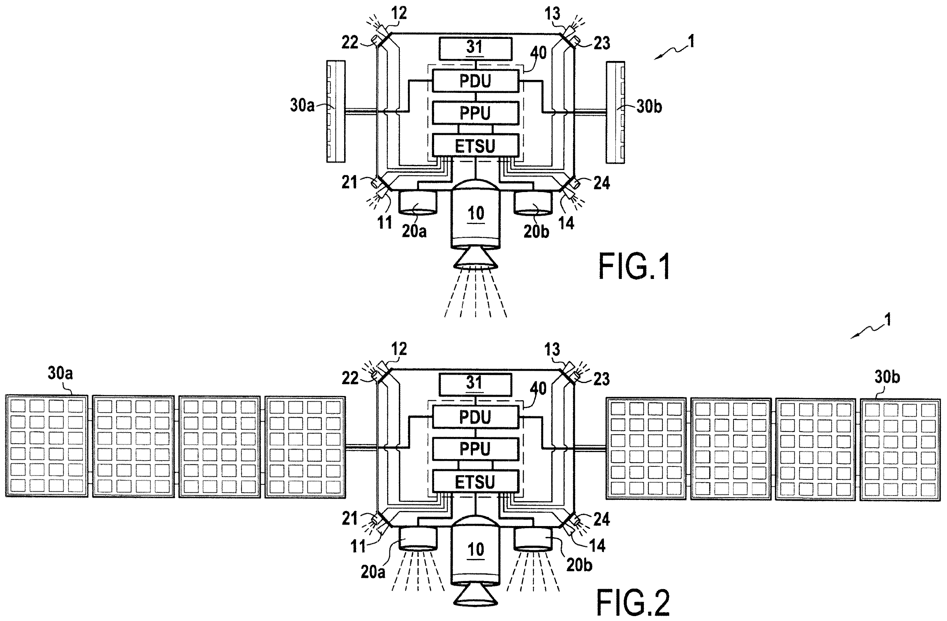

La FIG 1 représente un exemple de réalisation de l'engin spatial 1 vu du dessus. Dans cet exemple, l'engin spatial 1 est un satellite de forme sensiblement parallélépipédique. Il comprend un propulseur solide principal 10 et deux propulseurs électriques principaux 20a et 20b. Il comprend également à chacun de ses coins (quatre coins sont ici représentés) un petit propulseur solide 11, 12, 13 et 14 respectivement et un petit propulseur électrique 21, 22, 23 et 24 respectivement. L'alimentation électrique de l'engin spatial est assurée par des panneaux solaires 30a et 30b (repliés sur la FIG 1) d'une part et par des batteries 31 d'autre part. L'engin spatial 1 possède en outre un système mutualisé d'alimentation et de commande 40.

Dans un autre exemple de réalisation, les petits propulseurs 11-14 et 21-24 peuvent être de même nature, par exemple solides.

Le propulseur solide principal 1 est disposé au centre de la face arrière de l'engin spatial 10 et orienté selon l'axe d'inertie avant-arrière de l'engin 1. Les deux propulseurs électriques principaux 20a et 20b sont disposés de manière symétrique de part et d'autre du propulseur solide principal 10. Les petits propulseurs solides 11-14, au nombre de quatre dans cet exemple, sont orientés de telle sorte que leurs directions ne soient pas toutes inclues dans un unique plan afin de permettre le contrôle d'attitude de l'engin 1 autour de son centre de gravité dans les trois directions de l'espace. Il en va de même pour les petits propulseurs électriques 21-24.

La FIG 1 représente l'engin spatial 1 exécutant une manoeuvre du type forte poussée. Le propulseur solide principal 10 est allumé et fournit la majeure partie de la poussée de l'engin 1. Certains des petits propulseurs solides 11-14 peuvent être allumés seuls ou en combinaison pour contrôler l'attitude de l'engin 1. Les propulseurs électriques 20-24 sont de préférence éteints. Lors d'une telle manoeuvre du type forte poussée, il est préférable que les panneaux solaires 30a et 30b soient repliés. Le système mutualisé d'alimentation et de commande 40, et donc le contrôle des propulseurs solides 10-14, est alors alimenté grâce aux batteries 31.

La FIG 2 représente l'engin spatial 1 exécutant une manoeuvre du type forte Isp. Les propulseurs électriques principaux 20a, 20b sont allumés et fournissent la majeure partie de la poussée de l'engin 1. Certains des petits propulseurs électriques 21-24 peuvent être allumés seuls ou en combinaison pour contrôler l'attitude de l'engin 1. Les propulseurs solides 10-14 sont de préférence éteints mais les petits propulseurs solides 11-14 peuvent éventuellement être utilisés en secours ou pour corriger de manière urgente une trajectoire dangereuse, ou une attitude anormale en cas de désorientation de l'engin et de ses panneaux solaires par exemple. Lors d'une telle manoeuvre du type forte Isp, il est préférable que les panneaux solaires 30a et 30b soient déployés et fonctionnels car les propulseurs électriques consomment une grande quantité d'électricité.

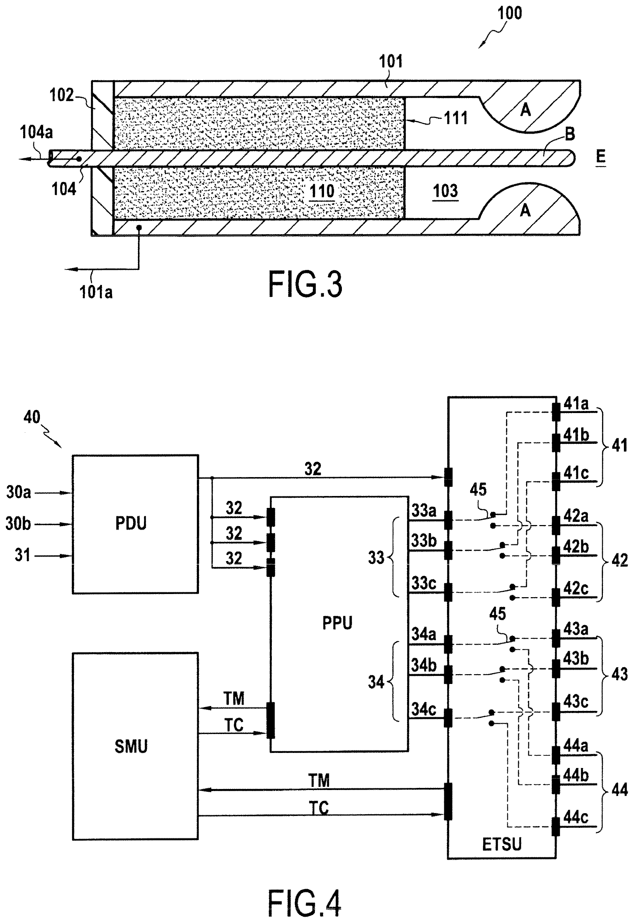

Un exemple de propulseur solide 100 est représenté sur la FIG 3. Il peut s'agir par exemple de l'un des petits propulseurs solides 11-14. Le propulseur solide 100 possède un corps cylindrique 101 et une base 102 venant fermer une première extrémité du corps cylindrique 101 et ainsi former une cavité 103 à l'intérieur du corps cylindrique 101. Une tige 104 traverse la base 102, pénètre dans la cavité 103, et s'étend sensiblement jusqu'au niveau de la seconde extrémité du corps cylindrique 101. La cavité 103 est remplie avec un propergol solide 110.

Le corps cylindrique 101 et la tige 104 sont formés chacun d'un matériau conducteur d'électricité, pas nécessairement le même, tandis que la base 102 est isolante. Le corps cylindrique 101 et la tige 104 constituent ainsi respectivement une première et deuxième électrode A et B, connectées respectivement à deux terminaux 101a et 104a.

Le propergol solide 110 est un propergol solide dont la combustion est activée par un courant électrique ou la présence d'un champ électrique. Il peut s'agir d'un monergol ou d'un mélange de deux ou plusieurs espèces chimiques. Lorsque l'on applique une tension entre les électrodes A et B, la combustion du propergol solide 110 est activée au niveau de sa surface d'extrémité 111 ouverte sur l'extérieur et donc sur l'espace E. Les gaz libérés lors de cette combustion et éjectés vers l'espace E produisent la poussée du propulseur 100. Le réglage de la tension, du courant et/ou de la polarité aux bornes des électrodes A et B influent sur la combustion et permettent ainsi de moduler la poussée du propulseur 100. La combustion s'arrête et le propulseur 100 s'éteint donc lorsque l'on annule la tension aux bornes des électrodes A et B.

De retour à la FIG 1, les propulseurs solides 10-14 et électriques 20-24 sont alimentés et commandés par le système mutualisé d'alimentation et de commande 40. Celui-ci comprend un dispositif de distribution de puissance PDU, un dispositif d'alimentation et de contrôle PPU, et un dispositif de commutation ETSU. Il comporte en outre un ordinateur de bord SMU. Son fonctionnement s'apprécie mieux à la lumière de la FIG 4.

Le dispositif de distribution de puissance PDU reçoit la puissance électrique provenant des panneaux solaires 30a, 30b et des batteries 31, la régule, et fournit une alimentation électrique régulée, sous la forme d'un bus de puissance 32, destinée aux autres modules du système 40. Ce bus de puissance 32 est régulé sous 50V ou 100V par exemple.

Toutefois, dans d'autres exemples de réalisaiton, la PPU et l'ETSU pourraient être capables d'accepter une tension non régulée délivrée directement par les panneaux solaires ou les batteries et le dispositif PDU peut être omis.

Le dispositif d'alimentation et de contrôle PPU reçoit la puissance électrique en provenant du bus de puissance 32 : il utilise cette dernière qu'il reconditionne de différentes manières pour fournir plusieurs alimentations électriques de types différents réunies en plusieurs interfaces d'alimentations 33, 34. Il fournit notamment, pour chaque interface 33, 34, une alimentation principale 33a, 34a de forte puissance et une ou plusieurs alimentation auxiliaire (33b, 33c, 34b, 34c) de moindre puissance. Dans cet exemple de réalisation, l'alimentation principale 33a, 34a fournit une tension continue modulable pouvant aller jusqu'à 1000 V avec une puissance de plusieurs kW. Les alimentations auxiliaires 33b 33c, 34b, 34c fournissent ici des tensions de l'ordre de 20 V à 350 V avec une puissance de quelques dizaines ou d'une centaine de W.

Chaque interface 33, 34 comporte ainsi une pluralité de canaux d'alimentations 33a, 33b, 33c, respectivement 34a, 34b, 34c (trois sont ici représentés pour chaque propulseur mais il peut y en avoir plus) pour alimenter un propulseur 10-14 ou 20-24 et contrôler chacune de ses fonctions. Chaque alimentation 33a, 33b, 33c (respectivement 34a, 34b, 34c) peut être fournie en plusieurs exemplaires en sortie du dispositif d'alimentation et de contrôle PPU, ce dernier étant capable de les contrôler et de les moduler individuellement. Des alimentations supplémentaires de types différents sont naturellement envisageables. Le boîtier PPU intègre typiquement une capacité de commutation entre deux propulseurs électriques (interfaces de sortie 33 et 34).

Le dispositif de commutation ETSU permet de piloter davantage de propulseurs (ici quatre) à partir d'une même PPU en scindant à nouveau les deux interfaces d'alimentation électrique 33, 34 vers les différents propulseurs 10-14 et 20-24. Il reçoit en entrée les alimentations 33a-33c et 34a-34c de chaque interface 33, 34 et présente en sortie les harnais de connexion électrique 41-44 des propulseurs 10-14, 20-24. Chaque harnais 41-44 comporte une pluralité de canaux 41a-44c correspondant à la pluralité de canaux 33a-33c et 34a-34c des interfaces d'alimentations 33, 34. Naturellement, la FIG 4 étant avant tout schématique, la représentation du dispositif de commutation ETSU a été largement simplifiée pour ne représenter en entrée que trois alimentations pour chaque interface électrique propulseur 33, 34 utile à l'exposé et en sortie que quatre harnais électriques de connexion 41-44 malgré un nombre plus important de propulseurs décrits jusqu'ici.

Le dispositif de commutation ETSU est alimenté par le bus de puissance 32 et possède un réseau de relais 45 permettant la commutation souhaitée pour diriger la puissance et le contrôle d'une interface d'alimentations donné 33, 34 vers un propulseur 10-14, 20-24 à activer. Lorsqu'une commutation est effectuée, l'ensemble des canaux 33a-33c d'une interface d'alimentations donné 33 sont basculés vers les canaux 41a-41c d'un même harnais électrique de connexion 41 en respectant leurs correspondances.

Dans cet exemple de réalisation, les harnais électriques de connexion 41 et 42 peuvent alimenter deux propulseurs électriques 20-24 tandis que les harnais de connexion 43 et 44 peuvent alimenter deux propulseurs solides. Le dispositif de commande est alors capable de connecter chaque ensemble d'alimentation aux propulseurs électriques 20-24 via l'interface de connexion 33 et les harnais électriques de connexion 41 et 42 adaptés pour ces propulseurs, et capable de connecter ce même ensemble d'alimentations aux propulseurs solides 10-14 via l'interface de connexion 34 et les harnais de connexion 43 et 44 adaptés pour ces autres propulseurs.

Dans un autre exemple de réalisation, l'ensemble PPU-ETSU peut présenter une sortie adaptée à un propulseur électrique principal 20a ou 20b, et quatre sorties adaptées aux propulseurs auxiliaires 10-14 ou 20-24. Le deuxième propulseur électrique principal et les quatre autres propulseurs auxiliaires sont alors alimentés par un deuxième ensemble PPU-ETSU afin de présenter une meilleure robustesse aux défaillances.

L'ordinateur de bord SMU échange des données par télémétrie TM/télécommande TC avec le dispositif d'alimentation et de contrôle PPU d'une part et le dispositif de commutation ETSU d'autre part. Celui-ci leur transmet des consignes de poussée destinées à des propulseurs donnés 10-14, 20-24. A partir de ces consignes, le dispositif d'alimentation et de contrôle PPU, qui intègre la logique de commande des propulseurs, leur télémétrie et leur télécommande, module la puissance fournie par les alimentations concernées et transmets certains ordres ou réglages destinés aux propulseurs concernés 10-14, 20-24 via certains des canaux 33a-34c des interfaces d'alimentations 33 ou 34. Le dispositif de commutation ETSU réalise alors la ou les commutations nécessaires pour relier les alimentations concernées aux propulseurs 10-14, 20-24 concernés. Dans cet exemple de réalisation, le dispositif d'alimentation et de contrôle PPU comprend en outre un dispositif de commutation interne qui complète le dispositif de commutation ETSU externe et participe au schéma de commutation global.

Dans un autre exemple de réalisation, le dispositif PPU peut être simplifié pour ne présenter qu'une seule interface d'alimentation moteur commune 33, le dispositif de commutation ETSU externe assurant l'ensemble des fonctions de commutation entre les différents propulseurs vers des interfaces adaptées.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention définies par les revendications.

## Revendications

1. Engin spatial comprenant
au moins un propulseur chimique à propergol solide (10-14), et
au moins un propulseur électrique (20-24), et
**caractérisé en ce qu'**il comprend en outre un système mutualisé d'alimentation et de commande (40) configuré pour alimenter en électricité et commander le propulseur chimique à propergol solide (10-14) d'une part et le propulseur électrique (20-24) d'autre part, le système mutualisé d'alimentation et de commande (40) comprenant
un dispositif de distribution de puissance (PDU) configuré pour fournir une alimentation électrique régulée (32) à partir d'au moins une source d'énergie électrique (30a, 30b, 31),
un dispositif d'alimentation et de contrôle (PPU) configuré pour fournir une pluralité d'alimentations électriques (33a-33c, 34a-34c) de types différents à partir de l'alimentation électrique régulée (32), et
un dispositif de commutation (ETSU) configuré pour connecter sélectivement certaines desdites alimentations électriques (33a-33c, 34a-34c) à certains des propulseurs (10-14, 20-24).

2. Engin spatial selon la revendication 1, **caractérisé en ce que** le propulseur chimique à propergol solide (10-14) est du type contrôlable électriquement pour allumer/éteindre le propulseur (10-14) et moduler sa poussée.

3. Engin spatial selon la revendication 1 ou 2, **caractérisé en ce que** la télémétrie, la télécommande et la logique de pilotage du propulseur chimique à propergol solide (10-14) et du propulseur électrique (20-24) sont mutualisées dans le dispositif d'alimentation et de contrôle (PPU).

4. Engin spatial selon l'une quelconque des revendications 1 à 3, **caractérisé en ce que** le dispositif d'alimentation et de contrôle (PPU) fournit au moins une alimentation principale (33a, 34a) adaptée au fonctionnement du propulseur électrique (20-24) et au moins une alimentation auxiliaire (33b, 33c, 34b, 34c) adaptée au fonctionnement du propulseur chimique à propergol solide (10-14).

5. Engin spatial selon la revendication 4, **caractérisé en ce que** l'alimentation principale (33a, 34a) fournit une tension continue comprise entre environ 200 V et 1500 V avec une puissance comprise entre environ 1kW et 10 kW,
et **en ce que** l'alimentation auxiliaire (33b, 33c, 34b, 34c) fournit une tension continue comprise entre environ 20 V et 350 V avec une puissance comprise entre environ 50 W et 200 W.

6. Engin spatial selon l'une quelconque des revendications 1 à 5, **caractérisé en ce que** le dispositif d'alimentation et de contrôle (PPU) est configuré pour permettre le fonctionnement simultané d'un propulseur chimique à propergol solide (10-14) et d'un propulseur électrique (20-24).

7. Engin spatial selon l'une quelconques des revendications 1 à 6, **caractérisé en ce qu'**il comprend au moins un propulseur chimique à propergol solide principal (10) et une pluralité de petits propulseurs chimiques à propergol solide (11-14) de plus faible puissance.

8. Engin spatial selon l'une quelconque des revendications 1 à 7, **caractérisé en ce qu'**il comprend au moins un propulseur électrique principal (20a, 20b) et une pluralité de petits propulseurs électriques (21-24) de plus faible puissance.

9. Engin spatial selon la revendication 7 ou 8, **caractérisé en ce qu'**il comprend
un propulseur chimique à propergol solide principal (10) disposé sensiblement sur et orienté selon un axe d'inertie de l'engin (1),
une pluralité de propulseurs électriques principaux (20a, 20b) disposés autour du propulseur chimique à propergol solide principal (10), et
au moins trois petits propulseurs chimiques à propergol solide (11-14) ou trois petits propulseurs électriques (21-24) orientés selon des directions non coplanaires.

10. Engin spatial selon l'une quelconque des revendications 1 à 9, **caractérisé en ce que** sa propulsion est exclusivement réalisée à l'aide de propulseurs chimiques à propergol solide (10-14) et de propulseurs électriques (20-24).

11. Engin spatial selon l'une quelconque des revendications 1 à 10 **caractérisé en ce qu'**il comporte en outre au moins un dispositif d'orientation de poussée permettant de contrôler l'orientation du vecteur poussée d'un propulseur solide et **en ce que** le dispositif d'alimentation et de contrôle (PPU) fournit au moins une alimentation adaptée au fonctionnement dudit au moins un dispositif d'orientation de poussée.

## Patentansprüche

1. Raumfahrzeug, umfassend
mindestens ein chemisches Feststoffantriebswerk (10 - 14) und mindestens ein elektrisches Antriebswerk (20 - 24), und
**dadurch gekennzeichnet, dass** es ferner ein gemeinsames Versorgungs- und Steuersystem (40) umfasst, das dazu ausgelegt ist, Strom zu liefern und das chemische Feststoffantriebswerk (10 - 14) einerseits und das elektrische Antriebswerk (20 - 24) andererseits zu steuern, wobei das gemeinsame Versorgungs- und Steuersystem (40) umfasst
eine Stromverteilungsvorrichtung (PDU), die dazu ausgelegt ist, eine geregelte Stromversorgung (32) von mindestens einer Stromquelle (30a, 30b, 31) bereitzustellen,
eine Versorgungs- und Steuerungseinheit (PPU), die dazu ausgelegt ist, eine Mehrzahl von Stromversorgungen (33a - 33c, 34a - 34c) verschiedener Typen von der geregelten Stromversorgung (32) aus bereitzustellen, und
eine Schaltvorrichtung (ETSU), die dazu ausgelegt ist, einige der Stromversorgungen (33a - 33c, 34a - 34c) selektiv mit einigen der Antriebswerke (10 - 14, 20 - 24) zu verbinden.

2. Raumfahrzeug gemäß Anspruch 1, **dadurch gekennzeichnet, dass** das chemische Feststoffantriebswerk (10-14) vom elektrisch steuerbaren Typ ist, um das Antriebswerk (10-14) ein- und auszuschalten und seinen Schub zu modulieren.

3. Raumfahrzeug gemäß Anspruch 1 oder 2, **dadurch gekennzeichnet, dass** die Fernmessung, Fernsteuerung und Steuerlogik des chemischen Feststoffantriebswerks (10 - 14) und des elektrischen Antriebswerks (20 - 24) in der Versorgungs- und Steuerungseinheit (PPU) gemeinsam genutzt werden.

4. Raumfahrzeug gemäß einem der Ansprüche 1 bis 3, **dadurch gekennzeichnet, dass** die Versorgungs- und Steuerungseinheit (PPU) mindestens eine Hauptstromversorgung (33a, 34a) für den Betrieb des elektrischen Antriebswerks (20-24) und mindestens eine Hilfsstromversorgung (33b, 33c, 34b, 34c) für den Betrieb des chemischen Feststoffantriebswerks (10-14) bereitstellt.

5. Raumfahrzeug gemäß Anspruch 4, **dadurch gekennzeichnet, dass** die Hauptstromversorgung (33a, 34a) eine Gleichspannung zwischen etwa 200 V und 1500 V mit einer Leistung zwischen etwa 1 kW und 10 kW bereitstellt,
und dass die Hilfsstromversorgung (33b, 33c, 34b, 34c) eine Gleichspannung zwischen etwa 20 V und 350 V mit einer Leistung zwischen etwa 50 W und 200 W bereitstellt.

6. Raumfahrzeug gemäß einem der Ansprüche 1 bis 5, **dadurch gekennzeichnet, dass** die Versorgungs- und Steuerungseinheit (PPU) so ausgelegt ist, dass sie den gleichzeitigen Betrieb eines chemischen Feststoffantriebswerks (10 - 14) und eines elektrischen Antriebswerks (20 - 24) ermöglicht.

7. Raumfahrzeug gemäß einem der Ansprüche 1 bis 6, **dadurch gekennzeichnet, dass** es mindestens ein chemisches Hauptfeststoffantriebswerk (10) und eine Mehrzahl von kleineren chemischen Feststoffantriebswerken (11 - 14) mit geringerer Leistung umfasst.

8. Raumfahrzeug gemäß einem der Ansprüche 1 bis 7, **dadurch gekennzeichnet, dass** es mindestens ein elektrisches Hauptantriebswerk (20a, 20b) und eine Mehrzahl von kleineren elektrischen Antriebswerken (21 - 24) mit geringerer Leistung umfasst.

9. Raumfahrzeug gemäß Anspruch 7 oder 8, **dadurch gekennzeichnet, dass** es umfasst:
ein chemisches Hauptfeststoffantriebswerk (10), das im Wesentlichen auf einer Trägheitsachse des Fahrzeugs (1) angeordnet und entlang dieser ausgerichtet ist,
eine Mehrzahl von elektrischen Hauptantriebswerken (20a, 20b), die um das chemische Hauptfeststoffantriebswerk (10) herum angeordnet sind, und
mindestens drei kleinere chemische Feststoffantriebswerke (11 - 14) oder drei kleinere elektrische Antriebswerke (21 - 24), die in nicht koplanare Richtungen ausgerichtet sind.

10. Raumfahrzeug gemäß einem der Ansprüche 1 bis 9, **dadurch gekennzeichnet, dass** sein Antrieb ausschließlich mittels chemischer Feststoffantriebswerke (10 - 14) und elektrischer Antriebswerke (20 - 24) erfolgt.

11. Raumfahrzeug gemäß einem der Ansprüche 1 bis 10, **dadurch gekennzeichnet, dass** es ferner mindestens eine Schuborientierungsvorrichtung umfasst, mit der sich die Orientierung des Schubvektors eines Feststoffantriebswerks steuern lässt, und dass die Versorgungs- und Steuerungsvorrichtung (PPU) mindestens eine Stromversorgung für den Betrieb der mindestens einen Schuborientierungsvorrichtung bereitstellt.

## Claims

1. A space vehicle comprising:
at least one solid-propellant chemical thruster (10-14); and
at least one electric thruster (20-24);
**characterized in that** it further comprises a shared power supply and control system (40) configured to provide electrical power and control both to the solid-propellant chemical thruster (10-14) and to the electric thruster (20-24), the shared power supply and control system (40) comprising:
• a power distribution device (PPU) configured to deliver a regulated electrical power supply (32) from at least one electrical energy source (30a, 30b, 31);
• a power supply and control device (PPU) configured to deliver a plurality of electrical power supplies (33a-33c, 34a-34c) of different types from the regulated electrical power supply (32); and
• a switch device (ETSU) configured to connect certain of said electrical power supplies (33a-33c, 34a-34c) selectively to certain thrusters (10-14, 20-24).

2. A space vehicle according to claim 1, **characterized in that** the solid-propellant chemical thruster (10-14) is of the electrically controllable type to enable the thruster (10-14) to be switched on and off and to enable its thrust to be modulated.

3. A space vehicle according to claim 1 or 2, **characterized in that** the telemetry, the remote control, and the control logic for the solid-propellant chemical thruster (10-14) and for the electric thruster (20-24) are shared in the power supply and control device (PPU).

4. A space vehicle according to any one of claims 1 to 3, **characterized in that** the power supply and control device (PPU) delivers at least one main power supply (33a, 34a) adapted to the operation of the electric thruster (20-24) and at least one auxiliary power supply (33b, 33c, 34b, 34c) adapted to the operation of the solid-propellant chemical thruster (10-14).

5. A space vehicle according to claim 4, **characterized in that** the main power supply (33a, 34a) delivers a DC voltage lying in the range about 200 V to about 1500 V with power lying in the range about 1 kW to about 10 kW; and **in that** the auxiliary power supply (33b, 33c, 34b, 34c) delivers a DC voltage lying in the range about 20 V to about 350 V with power lying in the range about 50 W to about 200 W.

6. A space vehicle according to any one of claims 1 to 5, **characterized in that** the power supply and control device (PPU) is configured to enable a solid-propellant chemical thruster (10-14) and an electric thruster (20-24) to operate simultaneously.

7. A space vehicle according to any one of claims 1 to 6, **characterized in that** it includes at least one main solid-propellant chemical thruster (10) and a plurality of small solid-propellant chemical thrusters (11-14) of lower power.

8. A space vehicle according to any one of claims 1 to 7, **characterized in that** it includes at least one main electric thruster (20a, 20b) and a plurality of small electric thrusters (21-24) of lower power.

9. A space vehicle according to claim 7 or claim 8, **characterized in that** it includes:
• a main solid-propellant chemical thruster (10) arranged substantially on and pointing along an inertia axis of the vehicle (1);
• a plurality of main electric thrusters (20a, 20b) arranged around the main solid-propellant chemical thruster (10); and
• at least three small solid propellant chemical thrusters (11-14) or at least three small electric thrusters (21-24) pointing along directions that are not coplanar.

10. A space vehicle according to any one of claims 1 to 9, **characterized in that** its propulsion is provided exclusively by solid propellant chemical thrusters (10-14) and by electric thrusters (20-24).

11. A space vehicle according to any one of claims 1 to 10, **characterized in that** it further includes at least one thrust steering device for controlling the orientation of the thrust vector of a solid thruster, and **in that** the power supply and control device (PPU) delivers at least one power supply adapted to the operation of said at least one thrust steering device.
